Europäisches Patentamt

European Patent Office

Office européen des brevets

(19)

(11) Veröffentlichungsnummer: **0 140 150 B1**

# EUROPÄISCHE PATENTSCHRIFT

(12)

(45) Veröffentlichungstag der Patentschrift: **18.09.91**

(21) Anmeldenummer: 84111327.7

(22) Anmeldetag: 22.09.84

(51) Int. Cl.⁵: **B29C  45/00**, C08L 75/04,
B29D 7/00, A43B 13/04,
//B29L31:50

(54) Verfahren zur Herstellung von Platten aus hochverschleissfestem Kunststoff.

(30) Priorität: 07.10.83 DE 3336511

(43) Veröffentlichungstag der Anmeldung:
08.05.85 Patentblatt  85/19

(45) Bekanntmachung des Hinweises auf die
Patenterteilung:
18.09.91 Patentblatt  91/38

(84) Benannte Vertragsstaaten:
**DE FR IT**

(56) Entgegenhaltungen:
AT-B- 321 973        CH-A- 451 498
DD-A- 110 046        DE-A- 1 930 539
DE-A- 2 424 555      DE-B- 1 479 385
DE-C- 892 237        FR-A- 1 244 285
US-A- 1 449 445

H. Saechtling, Kunststoff-Taschenbuch, 20
Ausgabe, Carl Hanser Verlag München/Wien
1977, s. 393, 395 bis 397 und 400

H. Domininghaus, Die Kunststoffe und ihre
Eigenschaften, VDI-Verlag, Düsseldorf 1976

Ullmann's Enzyklopedie der technischen
Chemie, 4 Auflage, Verlag Chemie 1980,Band
19

(73) Patentinhaber: **Cimatec Chemisch-technische
Handelsgesellschaft mbH
Orkotten 36
W-4404 Telgte(DE)**

(72) Erfinder: **Günzel, Bodo
Diekhoffskamp 9
W-4404 Telgte 2(DE)**

(74) Vertreter: **Patentanwälte Meinke und Dabringhaus Dipl.-Ing. J. Meinke Dipl.-Ing. W. Dabringhaus
Westenhellweg 67
W-4600 Dortmund 1(DE)**

Rank Xerox (UK) Business Services

## Beschreibung

Die Erfindung richtet sich auf ein Verfahren zur Herstellung von Schuhsohlen aus hochverschleißfestem Kunststoff, wobei aus einem Gemisch aus Polyol mit einem Füllstoffanteil von 0 bis 30 % unter Hinzufügung von Isozyanat zunächst Platten gegossen werden.

Schuhsohlen wurden früher insbesondere aus Leder gefertigt, wobei es inzwischen ebenfalls bekannt ist, diese Produkte aus Gummi oder Kunststoff herzustellen, wobei man bemüht ist, insbesondere den Gummi-Schuhsohlen schon eine relativ hohe Standfestigkeit gegen Abrieb zu geben.

Aus der DD-A-110 046 ist ein Verfahren zur Herstellung von thermoplastischen Polyurethan-Elastomeren aus Komponenten, die aus Polyol, 10 bis 30 % Füllstoff, beispielsweise Kreide, und Diisozyanat gebildet sein können. Die aus diesen Komponenten bestehende Reaktionsmischung wird zu Platten gegossen und danach granuliert. Aus der erhaltenen, ein Zwischenprodukt darstellenden Polyurethanmasse können anschließend durch eine formgebende Weiterverarbeitung, beispielsweise durch Spritzgießen, abriebfeste Formartikel, wie Schuhsohlen, hergestellt werden.

Gegenüber der bekannten Lösung ist es Aufgabe der vorliegenden Erfindung, ein rationalisiertes Verfahren zur Herstellung von Schuhsohlen zu schaffen, wobei die Schuhsohlen hinsichtlich ihres Aussehens Ledersohlen gleichen und hinsichtlich Abriebfestigkeit und Preis bekannten Schuhsohlen überlegen sind.

Diese Aufgabe wird erfindungsgemäß dadurch gelöst, daß die Platten im Hochdruckgießverfahren als Halbfabrikate aus hochverschleißfestem Kunststoff hergestellt werden, jede so hergestellte Platte anschließend in ihrer Mittelebene zur Erzeugung zweier Platten halber Wandstärke gespalten wird, die vor dem Spalten außen liegende Hauptseite jeder Platte gereinigt, bedruckt und anschließend lackiert wird und nachfolgend aus den so behandelten Platten die Schuhsohlen ausgestanzt werden.

Ein Vorteil der Erfindung besteht darin, daß bei der Herstellung von Schuhsohlen aus Polyurethan die Sohlen nicht, wie bisher üblich, als Formartikel durch Gießen oder Spritzgießen, hergestellt werden oder an das Schuhmaterial angespritzt werden müssen, sondern zunächst plattenförmige Halbfabrikate im Hochdruckgießverfahren hergestellt werden, die dann anschließend gespalten, gereinigt, bedruckt, lackiert werden und wobei dann nachfolgend durch Ausstanzen die Schuhsohlen geformt werden. Damit wendet sich die Erfindung gegen die bisher übliche Verfahrensweise, sich nämlich des Formspritzens oder Formgießens zu bedienen, vielmehr wird hier der Schritt des Hochdruckgießens an den Anfang des Verfahrens gestellt und gegenüber der oben genannten Druckschrift, beispielsweise auf die Herstellung eines zu granulierenden Zwischenproduktes verzichtet.

Auch der Literaturstelle H. Saechtling, Kunststoff-Taschenbuch, 20. Ausgabe, Karl-Hauser-Verlag München/Wien 1977, S. 393, 395 bis 397 und 400, sind Hinweise auf die Herstellung von Polyurethan-Schuhsohlen ebenso zu entnehmen wie aus H. Domininghaus, Die Kunststoffe in ihren Eigenschaften, VDI-Verlag, Düsseldorf 1976, oder Ullmann's Enzyklopädie der technischen Chemie, 4. Auflage, Verlag Chemie 1980, Band 19. Die dort vorhandenen Hinweise geben aber keine Anregungen, sich von der bisher bekannten Technologie abzuwenden, nämlich die Schuhsohlen als Spritzprodukte zu erzeugen und statt dessen Spalt- und Stanzprodukte eines hochdruckgegossenen, plattenförmigen Halbfabrikates zur Herstellung heranzuziehen.

In Ausgestaltung sieht die Erfindung vor, daß nach dem Ausstanzen die Schnittkanten durch Fräser od. dgl. nachgearbeitet werden und nach dem Fräsen der Schnittkanten eine Mehrzahl von Formlingen zusammengefaßt, gestapelt und gepreßt wird und der so erzeugte Formlingblock randseitig lackiert wird.

Wie beispielsweise bei der Herstellung von Schuhsohlen aus einem Kautschukprodukt bekannt, sieht die Erfindung auch vor, daß bei Herstellung von Schuhsohlenzuschnitten, diese im Bereich des Gelenks durch Materialabtragung von der unlackierten Seite her geschärft werden.

Die Erfindung ist nachstehend anhand der Zeichnung beispielsweise näher erläutert. Diese zeigt in

Fig. 1     einen Schuhsohlenzuschnitt gemäß der Erfindung in räumlicher Darstellung mit Aufsicht auf die in der Gebrauchslage dem Schuhkörper zugewandte Innenseite,

Fig. 2     ein Fluß-Schaubild einer Anlage zur Durchführung des Verfahrens.

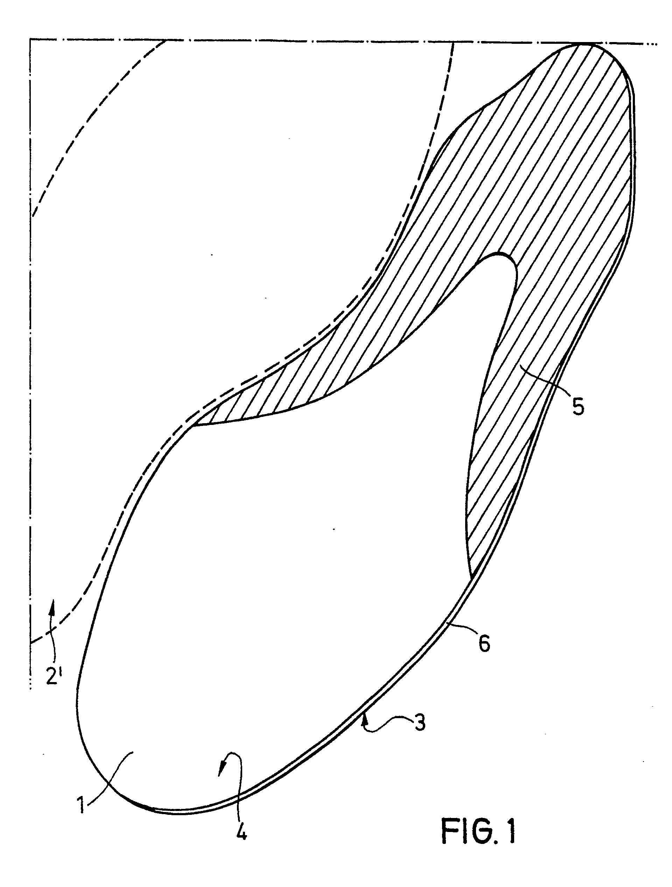

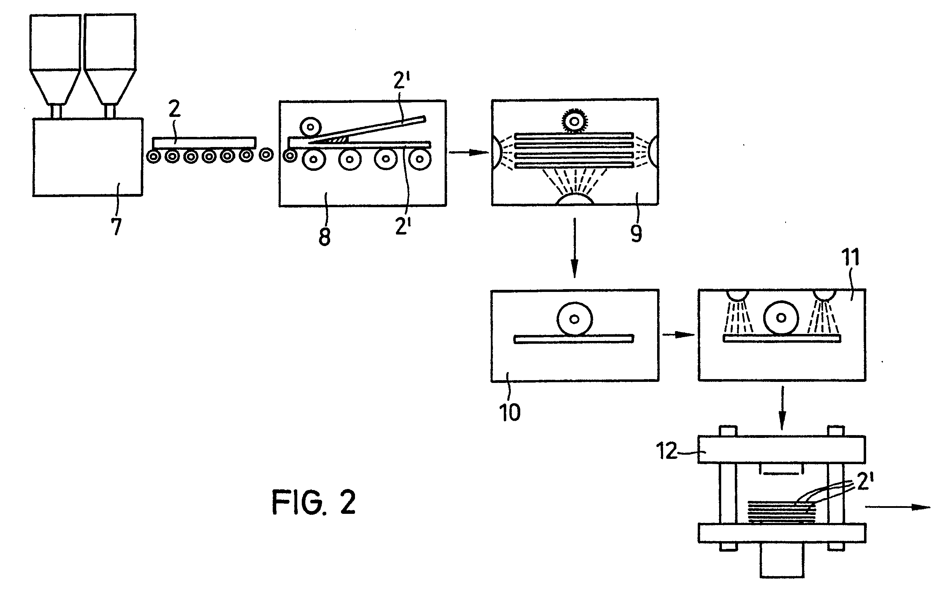

Die in Fig. 1 dargestellte Schuhsohle 1 ist als Zuschnitt gestaltet und zwar aus einer lediglich gestrichelt angedeuteten Platte 2' aus einem Gemisch aus Poliol mit einem Füllstoff sowie Isocyanat. Wesentlich ist dabei, daß die angedeutete Platte 2' hier schon als gespaltene Rohlingsplatte vorliegt, d. h. die Ausgangsplatte 2 ist doppelt so stark und in ihrer Mittelebene auseinandergetrennt worden, wie dies in Fig. 2 dargestellt ist.

Die Unter- bzw. Laufseite 3 der Schuhsohle 1 ist mit einem lederähnlichen Design bedruckt und mit Klarlack überlackiert, was nicht näher dargestellt ist.

Die in der Gebrauchslage dem Schuhkörper zugewandte Seite 4 der Schuhsohle 1 ist im Gelenkbereich 5 geschärft, d. h. dort ist mittels Fräsern oder ähnlichen Werkzeugen ein Teil des Materiales abgetragen, um die Schuhsohle 1 insbesondere in diesem Bereich geschmeidiger zu machen.

Die Randkanten als Schnittkanten 6 sind entgratet bzw. abgerundet. Dieser Grat bzw. dieser Abschlußbereich kann je nach Mode unterschiedlich gestaltet sein, sehr scharfkantig oder sehr stark abgerundet od. dgl. Auch diese Kante ist lackiert.

In Fig. 2 ist lediglich prinzipiell eine Anlage als Flußschaubild dargestellt:
Einer Reaktionsgießmaschine 7 ist eine Spaltmaschine 8 nachgeschaltet, in der eine in der Reaktionsgießmaschine erzeugte Kunststoffplatte 2 in zwei Halbplatten 2' gespalten wird.

Der Spaltmaschine 8 ist im Bearbeitungsfluß eine Reinigungsanlage 9, dann eine Druckanlage 10 zum Bedrucken wenigstens einer Oberfläche einer Rohlingsplatte 2' und dieser wiederum eine Lackieranlage 11 nachgeschaltet, die die bedruckte Oberfläche nachlackiert. Zur Erzeugung von Zuschnitten aus den Rohlingsplatten 2 bzw. 2' ist nachfolgend eine Mehrfachstanze 12 angeordnet.

Natürlich ist das beschriebene Ausführungsbeispiel noch in vielfacher Hinsicht abzuändern, ohne den Grundgedanken der Erfindung zu verlassen. So ist die Erfindung insbesondere nicht auf das bevorzugt beschriebene Ausführungsbeispiel zum Einsatz bei der Erzeugung von Schuhsohlen beschränkt, auch nicht auf die Art der Anlageteile, die nur symbolisch wiedergegeben sind. Das Einsatzgebiet der Erfindung liegt überall dort, wo Leder oder Gummimaterial bisher eingesetzt wurde und entsprechende Eigenschaften an Festigkeit, insbesondere Abriebfestigkeit, gefordert waren. Natürlich kann die Erfindung auch z. B. in der Möbelindustrie, in der Herstellung von Artikeln aus Lederersatzstoffen, wie Koffern, Taschen od. dgl., eingesetzt werden. In der Industrie als Maschinenunterlage, als Dämpfungselemente, als Dichtungen u. dgl. mehr.

## Patentansprüche

1. Verfahren zur Herstellung von Schuhsohlen (1) aus hochverschleißfestem Kunststoff, wobei aus einem Gemisch aus Polyol mit einem Füllstoffanteil von 0 bis 30 % unter Hinzufügung von Isozyanat zunächst Platten (2) gegossen werden, dadurch gekennzeichnet, daß
   - die Platten im Hochdruckgießverfahren als Halbfabrikate aus hochverschleißfestem Kunststoff hergestellt werden,
   - jede so hergestellte Platte anschließend in ihrer Mittelebene zur Erzeugung zweier Platten (2') halber Wandstärke gespalten wird,
   - die vor dem Spalten außen liegende Hauptseite jeder Platte gereinigt, bedruckt und anschließend lackiert werden und
   - nachfolgend aus den so behandelten Platten die Schuhsohlen ausgestanzt werden.

2. Verfahren nach Anspruch 1, dadurch gekennzeichnet, daß nach dem Ausstanzen die Schnittkanten durch Fräser od. dgl. nachbearbeitet werden und nach dem Fräsen der Schnittkanten eine Mehrzahl von Formlingen zusammengefaßt, gestapelt und gepreßt wird und der so erzeugte Formlingblock randseitig lackiert wird.

3. Verfahren nach Anspruch 1 oder 2, dadurch gekennzeichnet, daß bei Herstellung von Schuhsohlenzuschnitten diese im Bereich des Gelenkes durch Materialabtragung von der unlackierten Seite geschärft werden.

## Claims

1. A process for the production of shoe soles (1) from highly wear-resistant plastics material, wherein plates (2) are firstly moulded from a mixture of polyol with a filler component of from 0 to 30%, with the addition of isocyanate, characterised in that:
   - the plates are produced in a high pressure moulding process in the form of semi-manufactured products from highly wear-resistant plastics material,
   - each plate produced in that way is then split at its central plane to produce two plates (2') of half the thickness,
   - the major side of each plate, which is on the outside prior to the splitting operation, is cleaned, printed upon and then lacquered, and
   - the shoe soles are subsequently stamped out of the plates when treated in that way.

2. A process according to claim 1 characterised in that after the stamping-out operation the cut edges are finished by milling cutters or the like and after the operation of milling the cut edges a plurality of shaped blanks are brought together, stacked and pressed and the block of shaped blanks produced in that way is lacquered at the edges.

3. A process according to claim 1 or claim 2 characterised in that in the production of shoe sole blanks they are ground in the region of the shank by the removal of material from the unlacquered side.

## Revendications

1. Procédé pour la production de semelles de chaussures (1) en une matière plastique à haute résistance à l'usure, dans lequel des plaques (2) sont tout d'abord coulées à partir d'un mélange de polyol renfermant un pourcentage de substance de charge compris entre 0 et 30 %, avec adjonction d'isocyanate, caractérisé par le fait que

   - les plaques sont fabriquées en tant que produits semi-finis, par coulée sous haute pression, en une matière plastique à haute résistance à l'usure,
   - chaque plaque ainsi fabriquée est ensuite scindée dans son plan médian, en vue de produire deux plaques (2') d'une demi-épaisseur de paroi,
   - la face principale de chaque plaque, située à l'extérieur préalablement à la subdivision, est nettoyée, empreinte, puis laquée, et
   - dans l'enchaînement, les semelles de chaussures sont découpées à l'emporte-pièce à partir des plaques ainsi traitées.

2. Procédé selon la revendication 1, caractérisé par le fait que, à l'issue du découpage à l'emporte-pièce, les arêtes de coupe sont soumises à traitement ultérieur par l'intermédiaire de fraises ou dispositifs similaires et, à l'issue du fraisage des arêtes de coupe, de multiples ébauches sont rassemblées, empilées et comprimées, le bloc-ébauche ainsi obtenu étant ensuite laqué sur ses bords.

3. Procédé selon la revendication 1 ou 2, caractérisé par le fait que, lors de la fabrication de flans de semelles de chaussures, ces derniers sont parés au voisinage de l'articulation, par enlèvement de matière à partir de la face non laquée.

FIG.1

FIG. 2